# EUROPEAN PATENT APPLICATION

(11) **EP 2 173 057 A1**
(43) Date of publication of application: **07.04.2010**
(21) Application number: 07791002.4
(22) Date of filing: 19.07.2007
(51) Int. Cl.: H04L 9/14, H04L 12/28

(54) **WIRELESS TERMINAL DEVICE, WIRELESS CONNECTION METHOD, AND PROGRAM**

(71) Applicant: Panasonic Corporation, Kadoma-shi Osaka 571-8501 (JP)
(72) Inventor: ISHIHARA, Tomohiro, 2-1-61 Shiromi, Chuo-ku Osaka 540-6207 (JP); GOMYO, Kazumasa, 2-1-61 Shiromi, Chuo-ku Osaka 540-6207 (JP); LINO, Satoshi, 2-1-61 Shiromi, Chuo-ku Osaka 540-6207 (JP); HASHIMOTO, Yuji, 2-1-61 Shiromi, Chuo-ku Osaka 540-6207 (JP)
(74) Representative: Grünecker, Kinkeldey, Stockmair & Schwanhäusser Anwaltssozietät
(86) International application number: PCT/JP2007/064248
(87) International publication number: WO 2009/011055

(57) **Abstract**

A wireless terminal device which can be easily connected with an access point with a simple procedure and with no expertise, a wireless connection method and a program are provided. In a wireless terminal device (100), when information (SSID) for identifying the access point and authentication information (encryption key) used for connection with the access point are inputted, each of system judgment units (123 to 127) performs a trial connection with the connection target access point according to the obtained access point information and authentication information in accordance with the selected security system in series and determines the security system by which the trial connection succeeds as the security system used for the actual communication.

## Description

### Technical Field

The present invention relates to a wireless terminal, wireless access method and program for accessing a wireless LAN.

### Background Art

Recently, devices for performing communication using a wireless LAN are widely spread, including mobile phone, laptop PC's and PDA's. With a wireless LAN, it is possible to access the Internet and receive services without taking care of connection.

In a network access by wireless, it is possible to connect to an access point even from the outside of buildings, and, consequently, there are risks of wiretap and hacking. Therefore, in wireless LAN communication, the encryption of communication paths is very important.

The encryption schemes (security schemes) in a wireless LAN have been developed day by day, and many schemes are defined. Access points and wireless LAN terminals support these encryption schemes.

For example, the wireless communication scheme of the IEEE (Institute of Electrical and Electronic Engineers) 802.11 standard defines that, when a wireless terminal performs data communication with another wireless terminal via an access point, the access point is made to acknowledge the presence of the wireless terminal by performing a predetermined procedure called "association" between the access point and the wireless terminal. To identify an access point for which this association is performed, an identifier called ESSID (Extended Service Set Identifier) is used. Upon selecting an access point for which the user of a wireless terminal wants to perform association, the same ESSID needs to be set up in the access point and the wireless terminal. By setting up the same ESSID in a plurality of access points, even if a wireless terminal moves freely, it is possible not to discontinue the connection with an access point, which is generally referred to as "roaming." Here, an ESSID is made by expanding an SSID (Service Set IDentifier), which is an identifier of an access point, such that the SSID is used even in a network in which a plurality of access points are set. At present, the term "SSID" is likely to be used to refer to ESSID, and therefore SSID will be used to refer to ESSID in the following explanation.

Patent Document 1 discloses an information processing device that has a plurality of wireless LAN configuration profiles and that automatically switches to the best communication environment. Upon setting up a wireless LAN, for example, an SSID, encryption scheme and network key are inputted.

Patent Document 2 discloses an encryption key configuration system for exchanging security information between a wireless LAN terminal and an access point, determining an optimal encryption scheme based on this information and setting up an encryption key.

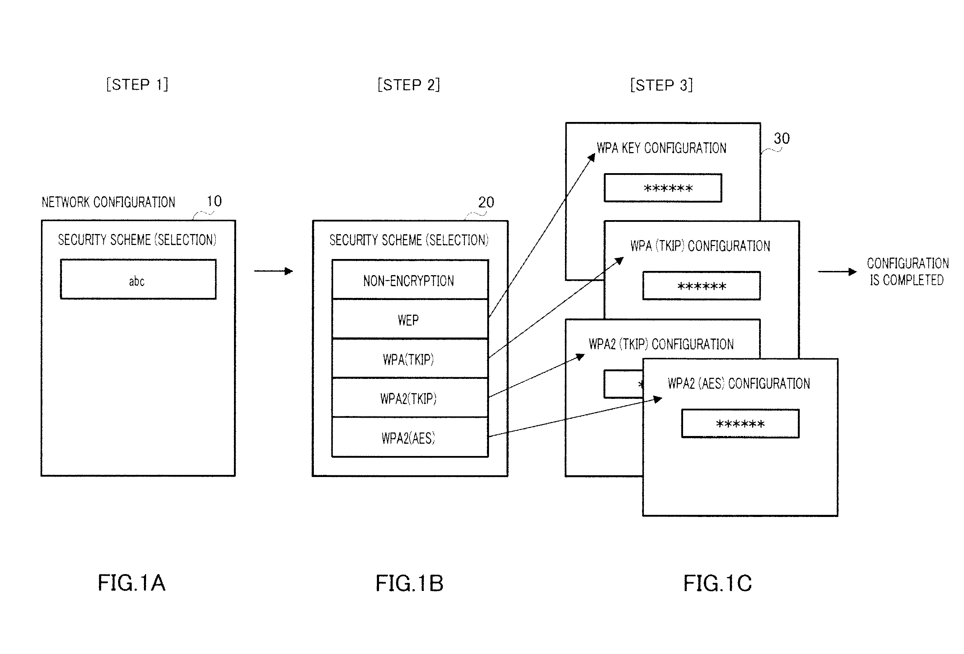

FIG.1 illustrates the conventional network configuration steps in a wireless LAN. FIG.1A shows network configuration screen 10, FIG.1B shows security scheme selecting screen 20, and FIG.1C shows WPA (Wi-Fi Protected Access) key configuration screen 30.

In step 1 in FIG.1A, an SSID is set up from network configuration screen 10. Here, the SSID is, for example, "abc."

After the SSID is set up, the step moves to step 2 in FIG.1B, and the security scheme is selected from security scheme selecting screen 20. Here, examples of the security scheme include "no encryption", WEP (Wired Equivalent Privacy), WPA (TKIP), WPA2 (TKIP), WPA2 (AES). Further, there are WPA-PSK, WPA, WPA2-PSK, WPA2, WPA-Auto, WPA-Disable, WEP, No_Security, and so on.

After the security scheme is selected, the step moves to step 3 in FIG.1C, and a WPA key for the selected security scheme is inputted from WPA key configuration screen 30. By inputting the WPA key, the network configuration is completed.
Patent Document 1: Japanese Patent Application Publication No.2005-176021
Patent Document 2: Japanese Patent Application Publication No.2005-175524

### Disclosure of Invention

### Problems to be Solved by the Invention

However, there are the following problems in such a conventional network configuration method.

(1) In the process of wireless LAN configuration, after an SSID is set up, a security scheme and encryption key for the scheme need to be set up. In this case, it takes many steps and tasks to complete a wireless LAN configuration. In the example of FIG.1, it takes three steps 1 to 3 to complete a wireless LAN configuration.

(2) In a step of selecting the security scheme of wireless LAN (e.g. step 2 in FIG.1B), an adequate scheme needs to be selected from a selection group, which requires expert knowledge. Therefore, the configuration is difficult to set up for general users, and configuration error is likely to be caused.

(3) When a terminal supporting a new scheme (e.g. WPA) is connected with an access point set up in days when there was only WEP, which encryption scheme should be used is unknown, which causes configuration error. In this case, although WEP should be set in a terminal, if new scheme of WPA is set up in the terminal, presuming that connection is also possible even using WPA, configuration error is caused.

(4) With the device in Patent Document 2, messages (packets) including security information are exchanged between a wireless LAN terminal and an access point. To realize this function, it is necessary to add new functions to existing access points. That is, there are problems that existing access points cannot be used and that access points need to be replaced. In actual operations, it is extremely disadvantageous to provide new access points in costs.

In view of the above, it is therefore an object of the present invention to provide a wireless terminal, wireless access method and program that allows easy connection with an access point in simple steps without requiring expert knowledge.

### Means for Solving the Problem

The wireless terminal of the present invention employs a structure having: a security scheme storage section that stores a plurality of security schemes to use in wireless communication; an access point information acquiring section that acquires access point information for identifying an access point; an authentication information acquiring section that acquires authentication information for connecting with an access point; a security scheme selecting section that selects one security scheme from the plurality of security schemes stored in the security scheme storage section, based on the access point information and the authentication information acquired; a testing connection trying section that tries a testing connection with an access point of a connection target sequentially, according to a security scheme selected based on the access point information and the authentication information; and a security scheme determining section that determines a security scheme by which the testing connection succeeds, as a security scheme to use in actual communication.

The wireless access method of the present invention includes the steps of: storing a plurality of security schemes to use in wireless communication; acquiring access point information for identifying an access point; acquiring authentication information for connecting with an access point; selecting one security scheme from the plurality of security schemes stored, based on the access point information and the authentication information acquired; trying a testing connection with an access point of an connection target sequentially, according to a security scheme selected based on the access point information and the authentication information acquired; and determining a security scheme by which the testing connection succeeds, as a security scheme to use in actual communication.

Also, from another view point, the present invention provides a program to make a computer execute the steps of the above wireless access method.

### Advantageous Effect of the Invention

According to the present invention, by trying a testing connection with the connection target access point sequentially according to security schemes selected based on acquired access point information and authentication information, the security scheme that allows the testing connection to succeed is determined as the security scheme to use in actual communication, so that it is possible to complete a wireless LAN configuration only by inputting access point information (e.g. SSID) and authentication information (e.g. encryption key) from the user, and set up a network without taking care of a security scheme.

To be more specific, the following effects can be provided.

(1) It is possible to eliminate the step of selecting a security scheme and complete a wireless LAN configuration in two steps, so that it is possible to simplify the configuration.

(2) The user needs not take care of difficult security schemes.

(3) It is possible to apply the present invention to existing access points as is, so that it is not necessary to replace access points.

### Brief Description of Drawings

FIG.1 illustrates the conventional network configuration steps in a wireless LAN;
FIG.2 is a functional block diagram showing the structure of a wireless terminal according to an embodiment of the present invention;
FIG.3 shows a table configuration example of a security scheme management table in a wireless terminal according to the present embodiment;
FIG.4 shows a table configuration example of a security scheme management table in a wireless terminal according to the present embodiment;
FIG.5 shows another table configuration example of a security scheme management table in a wireless terminal according to the present embodiment;
FIG.6 shows a control sequence where a wireless terminal according to the present embodiment tries wireless LAN connection with an existing access point;
FIG.7 illustrates the network configuration steps in a wireless LAN by a wireless terminal according to the present embodiment;
FIG.8 is a flowchart showing an outline of wireless LAN configuration process by a wireless terminal according to the present embodiment;
FIG.9 is a flowchart illustrating wireless LAN configuration process in detail by a wireless terminal according to the present embodiment;
FIG.10 is a flowchart illustrating testing connection process in detail by a wireless terminal according to the present embodiment;
FIG.11 is a flowchart illustrating testing connection process in detail by a wireless terminal according to the present embodiment; and
FIG.12 is a flowchart illustrating testing connection process in detail by a wireless terminal according to the present embodiment.

### Best Mode for Carrying Out the Invention

An embodiment of the present invention will be explained below in detail with reference to the accompanying drawings.

### (Embodiment)

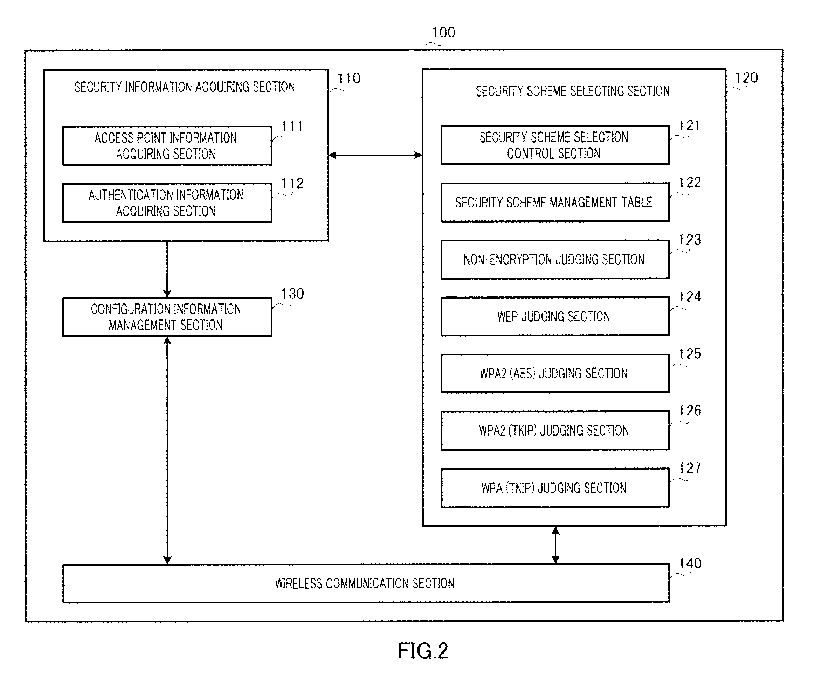

FIG.2 is a functional block diagram showing the structure of a wireless terminal according to an embodiment of the present invention. An example case will be explained with the present embodiment where a mobile terminal such as PHS (Personal Handy-phone System) and mobile phone is adopted as a wireless LAN terminal forming a wireless LAN system. Here, it is also possible to adopt a mobile information terminal such as PDA (Personal Digital Assistants) and laptop PC.

In FIG.2, wireless terminal 100 is provided with security information acquiring section 110, security scheme selecting section 120, configuration information management section 130 and wireless communication section 140.

Security information acquiring section 110 is provided with access point information acquiring section 111 and authentication information acquiring section 112. Security scheme selecting section 120 is provided with security scheme selection control section 121, security scheme management table 122, non-encryption judging section 123, WEP judging section 124, WPA2 (AES) judging section 125, WPA2 (TKIP) judging section 126 and WPA (TKIP) judging section 127.

Security information acquiring section 110 acquires information required for a wireless network access.

Access point information acquiring section 11 1 acquires access point information (e.g. SSID) to identify the connection target access point. Here, the input method is not limited. For example, it is possible to adopt manual input or selective input after searching for nearby access points.

Authentication information acquiring section 112 acquires authentication information (e.g. WEP key) for connecting with the connection target access point. Here, an input method is not limited.

Security scheme selecting section 120 finds a security scheme to use to connect with the connection target access point.

Security scheme selection control section 121 controls security scheme judging sections 123 to 127 and determines a security scheme to use. To be more specific, based on the access point information and authentication information acquired above, security scheme selection control section 121 selects one security scheme from a plurality of security schemes stored in security scheme management table 122.

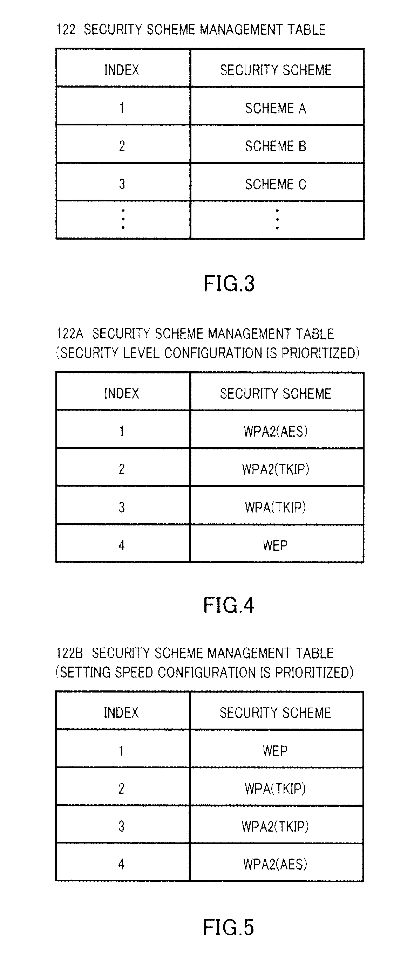

Security scheme management table 122 stores a plurality of security schemes for use in wireless communication in association with indices. Table structure examples will be described later using FIG.3 to FIG.5.

Non-encryption judging section 123 judges whether or not the security scheme is "non-encryption." WEP judging section 124 judges whether or not the security scheme is WEP. WPA2 (AES) judging section 125 judges whether or not the security scheme is WPA2 (AES). WPA2 (TKIP) judging section 126 judges whether or not the security scheme is WPA2 (TKIP). WPA (TKIP) judging section 127 judges whether or not the security scheme is WPA (TKIP). In the following explanation, there is a case where non-encryption judging section 123, WEP judging section 124, WPA2 (AES) judging section 125, WPA2 (TKIP) judging section 126 and WPA (TKIP) judging section 127 is collectively referred to as "scheme judging sections 123 to 127."

Scheme judging sections 123 to 127 described above has the functions of testing connection trying section for sequentially trying a testing connection with the connection target access point, according to a security scheme selected based on acquired access point information and authentication information, and the functions of a security scheme determining section for determining a security scheme by which the testing connection succeeds, as a security scheme to use in actual communication. Also, WEP judging section 124 has the functions of a judging section for judging whether the length of acquired authentication information is equal to a prescribed length, and, if the length of the authentication information is equal to the prescribed length, tries a testing connection.

Configuration information management section 130 stores parameters to use in wireless communication (such as an SSID, security scheme and authentication information).

Wireless communication section 140 performs wireless communication in the security scheme selection process. That is, wireless communication section 140 performs wireless communication after connecting with the connection target access point. The present embodiment presumes a wireless LAN, which is widely used in mobile information terminals such as laptop PC's and PDA's having wireless LAN functions. Here, instead of a wireless LAN, it is equally possible to use low power, short-distance, bidirectional wireless communication schemes such as Bluetooth and UWB (Ultra Wideband) that enable lower power consumption. Also, wireless communication terminals whose place of use can be moved such as FWA (Fixed Wireless Access) terminals, are included.

Security information acquiring section 110, security scheme selecting section 120 and configuration information management section 130, which are described above, are formed with a control section that controls the whole apparatus. To be more specific, the control section is formed with, for example, a CPU that controls the whole apparatus and performs network automatic configuration process, ROM and RAM that store programs with various process, and an EEPROM (Electrically Erasable Programmable ROM), which is an electrically-rewritable, nonvolatile memory, and these are executed as information processing in the CPU that controls the whole apparatus. Also, a nonvolatile memory stores terminal-specific terminal information such as the number and the name of a terminal.

Security scheme management table 122 described above is formed with a nonvolatile memory such as an EEPROM, and a fixed disk such as a HDD (Hard Disk Drive). Also, in addition to a disk apparatus such as an HDD, for example, an SRAM (Static RAM) that holds information written by power supply backup and an SD card (registered trademark) such as a flash memory that does not require power supply backup, are also applicable.

Also, with the present embodiment, assume that wireless LAN services use communication schemes that conform to schemes standardized of the IEEE 802 committee. The schemes standardized of the IEEE 802 committee include, for example, the IEEE 802.11 standard scheme, the IEEE 802.11a standard scheme, the IEEE 802.11b standard scheme and the IEEE 802.1 1 g standard scheme.

FIG.3 to FIG.5 show table configuration examples in security scheme management table 122. Here, FIG.3 shows a basic structure, FIG.4 shows security scheme management table 122A when the security level configuration is prioritized, and FIG.5 shows security scheme management table 122B when the setting speed configuration is prioritized.

As shown in FIG.3 to FIG.5, security schemes are set up per index (1, 2, 3, ...). For example, in the security schemes in FIG.3, scheme A is "non-encryption," scheme B is "WEP" and scheme C is "WPA2 (AES)."

When the security level configuration is prioritized, security scheme management table 122A in FIG.4 is used. Security scheme management table 122A sets up schemes in descending order of security level from indices 1, 2, 3, and so on. Security scheme selection control section 121 selects security schemes in descending order of security level from indices 1, 2, 3 and 4. Configuration information management section 130 tries testing connections by the schemes in descending order of security level from indices 1, 2, 3 and 4. Here, a testing connection is tried in the order from the scheme of the highest security level, and, consequently, when an access point uses a plurality of security schemes, it is possible to provide an advantage of adopting the security scheme of the highest security level.

When the setting speed configuration is prioritized, security scheme management table 122B of FIG.5 is used. Security scheme management table 122B sets up schemes in descending order of setting speed from indices 1, 2, 3, and so on. Security scheme selection control section 121 selects security schemes in descending order of setting speed from indices 1, 2, 3 and 4. Configuration information management section 130 tries testing connections b y schemes in descending order of setting speed from indices 1, 2, 3 and 4. In this example, security scheme A representing "non-encryption" is removed from the indices. Here, a testing connection is tried in the order from the scheme of the fastest setting speed, and, consequently, it is possible to provide an advantage of determining the security scheme early. Also, in many cases, a scheme of a faster setting speed is popular. Even in view of this point, it is possible to determine a security scheme early.

The encryption scheme automatic selection operations in wireless terminal 100 formed as above will be explained below.

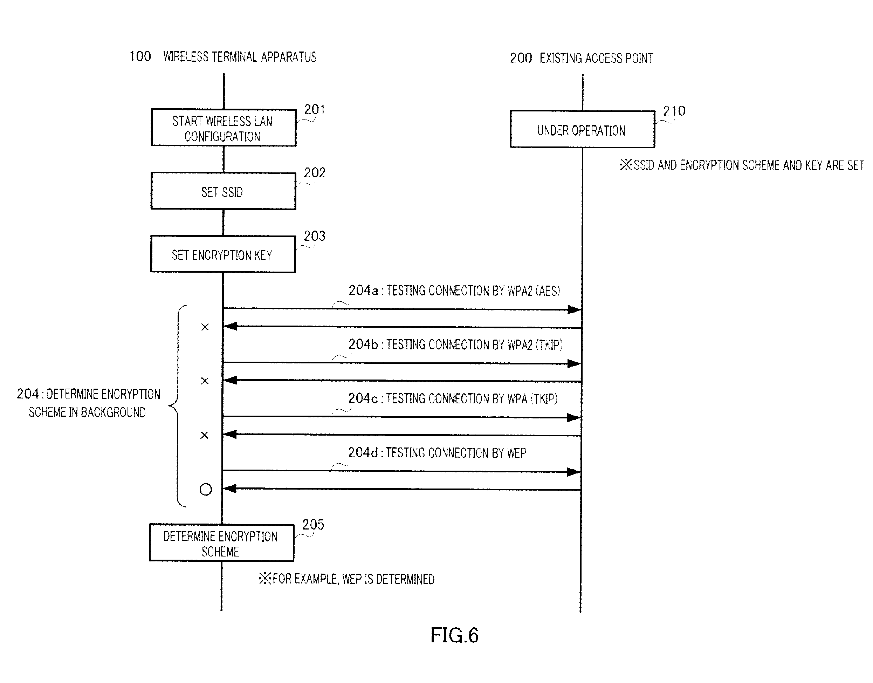

FIG.6 shows a control sequence in which wireless terminal 100 tries wireless LAN connection with an existing access point.

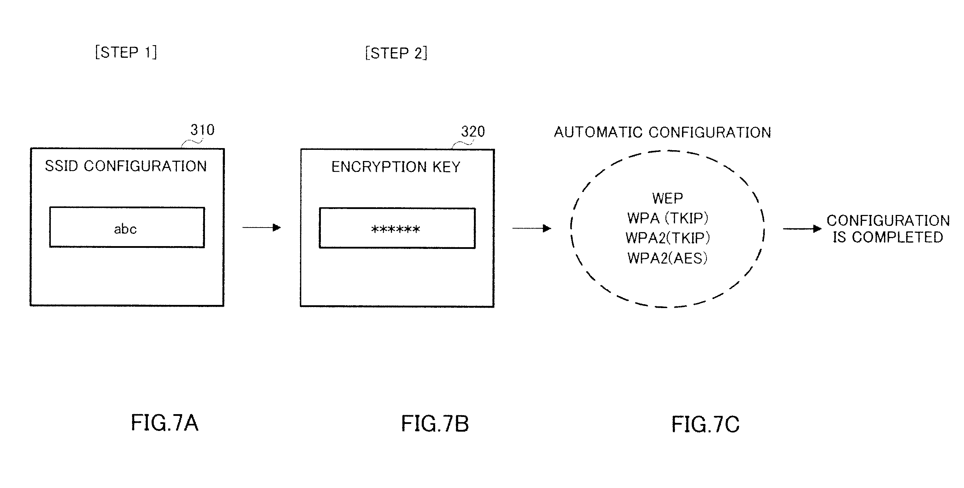

Also, FIG.7 illustrates the network configuration steps in a wireless LAN by wireless terminal 100. Here, FIG.7A shows network configuration screen 310, FIG.7B shows encryption key configuration screen 320 and FIG.7C shows automatic configuration.

Referring to the control sequence of FIG.6, wireless terminal 100 starts wireless LAN configuration operations (see reference numeral 201). To be more specific, wireless terminal 100 receives a command to start a wireless LAN configuration by user input, activates network configuration mode and displays network configuration screen 310 shown in FIG.7A.

By the way, existing access point 200 is being operated (see reference numeral 210). This access point 200 presumes that the SSID, encryption scheme and encryption key have been set up.

Wireless terminal 100 performs SSID configuration from network configuration screen 310 of FIG.7A (see reference numeral 202). Here, the SSID is, for example, "abc." The process of this network configuration step is step 1 in FIG.7A. Here, step 1 in FIG.7A is equivalent to step 1 in FIG.1A showing a conventional example.

Wireless terminal 100 performs encryption key configuration from encryption key configuration screen 320 of FIG.7B (see reference numeral 203). The encryption key configuration is, for example, "*****". The process of this network configuration step is step 2 in FIG.7B. Here, selection of a security scheme in step 2 in FIG.1B and key configuration in step 3 in FIG.1C showing a conventional example are omitted.

Referring to the control sequence of FIG.6, upon receiving as input the SSID "abc" and the encryption key "*****," wireless terminal 100 tries a testing connection with the access point in the background, based on the SSID and the encryption key received as input (see reference numeral 204).

To be more specific, configuration information management section 130 in wireless terminal 100 in FIG.2 commands wireless communication to wireless communication section 140 using parameters to use in wireless communication (such as the SSID, security scheme and authentication information). Wireless communication section 140 tries a testing connection with the access point using the security schemes judged by scheme judging sections 123 to 127 based on the parameters commanded from configuration information management section 130. Information required for wireless network access is supplied from security information acquiring section 110 to configuration information management section 130, and scheme judging sections 123 to 127 try a testing connection with the access point in the background. Here, the SSID acquired by access point information acquiring section 111 from network configuration screen 310 of FIG.7A and the encryption key acquired by authentication information acquiring section 112 from encryption key configuration screen 320 of FIG.7B, are given to configuration information management section 130. Also, the security scheme to use to access that access point is transported from security scheme selecting section 120 to configuration information management section 130 via security information acquiring section 110. Security scheme selection control section 121 determines the security scheme to use, with reference to security scheme management table 122. For example, in the case of using security scheme management table 122A of FIG.4, security scheme selection control section 121 selects security schemes in descending order of security level from index 1. Scheme judging sections 123 to 127 try testing connections in order from the scheme of the highest security level, in wireless communication section 140.

In FIG.6, of scheme judging sections 123 to 127 in security scheme selecting section 120 of wireless terminal 100, WPA2 (AES) judging section 125 tries a testing connection with access point 200 using security scheme WPA2 (AES) of the highest security level, and the testing connection by security scheme WPA2 (AES) fails (see reference numeral 204a). Next, WPA2 (TKIP) judging section 126 tries a testing connection with access point 200 using security scheme WPA2 (TKIP), and the testing connection by security scheme WPA2 (TKIP) fails (see reference numeral 204b). Next, WPA (TKIP) judging section 127 tries a testing connection with access point 200 using security scheme WPA (TKIP), and the testing connection by security scheme WPA (TKIP) fails (see reference numeral 204c). Next, WEP judging section 124 tries a testing connection with access point 200 using security scheme WEP of the lowest security level, and the testing connection by security scheme WEP succeeds (see reference numeral 204d).

In the control sequence of FIG.6, the testing connection by security scheme WEP succeeds, whereby wireless terminal 100 determines an encryption scheme (see reference numeral 205). Here, the encryption scheme is determined WEP.

Thus, for security schemes supported by wireless terminal 1 00, based on the acquired SSID and encryption key, wireless terminal 100 tries a testing connection with access point 200 in order of index in security scheme management table 122. Here, a testing connection involves performing communication with an access point in a processing sequence that conforms to the security scheme. In this case, the encryption key received as input is used. Also, wireless terminal 100 uses a security scheme by which testing connection succeeds, as the security scheme to use in actual communication. Here, access point 200 performs existing processing.

The above control sequence will be described below with reference to the network configuration steps in FIG.7. The user sets up an SSID in step 1 in FIG.7A and inputs an encryption key in step 2 in FIG.7B. Only with this configuration input operation, wireless terminal 100 tries a testing connection with access point 200 in the background, so that the security scheme is automatically set up and network configuration is completed. With the two steps of step 1 and step 2, it is possible to complete wireless LAN configuration and simplify the configuration. Here, selection of a security scheme in step 2 in FIG.1B and key configuration in step 3 in FIG.1C showing a conventional example are omitted. Also, the user needs not take care of difficult security schemes.
Further, it is possible to apply the above technique to existing access points as is, so that it is not necessary to replace access points.

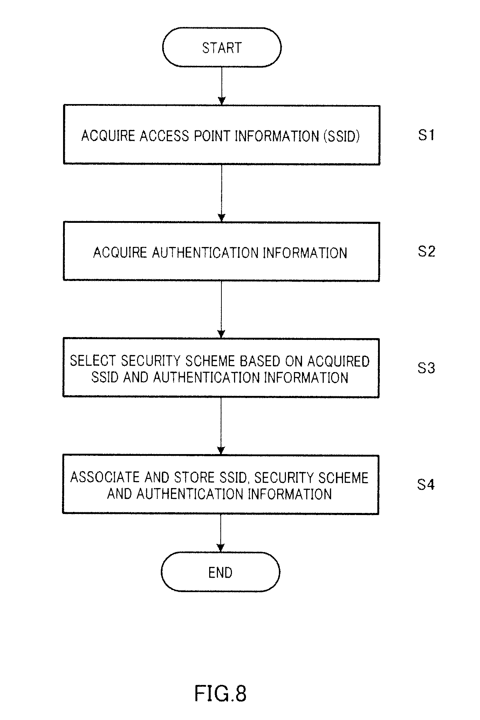

FIG.8 is a flowchart showing an outline of wireless LAN configuration process in wireless terminal 100. In this figure, "S" represents a step. Flowcharts including this flowchart, which will be described later, are carried out by a CPU forming control section 150.

In step S1, access point information acquiring section 111 in security information acquiring section 110 acquires security information (e.g. SSID). For example, access point information acquiring section 111 acquires security information from network configuration screen 310 in FIG.7A, by the SSID configuration. Here, the input method is not limited, and it is possible to adopt manual input or selective input after searching for nearby access points.

In step S2, authentication information acquiring section 112 in security information acquiring section 110 acquires authentication information (e.g. WEP key). For example, authentication information acquiring section 112 acquires authentication information from encryption key configuration screen 320 of FIG.7B, by the encryption key configuration. Here, the input method is not limited.

In step S3, security scheme selecting section 120 selects a security scheme based on the acquired security information (e.g. SSID) and authentication information.

In step S4, configuration information management section 130 associates and stores the SSID, the security scheme and the authentication information, and the flow ends.

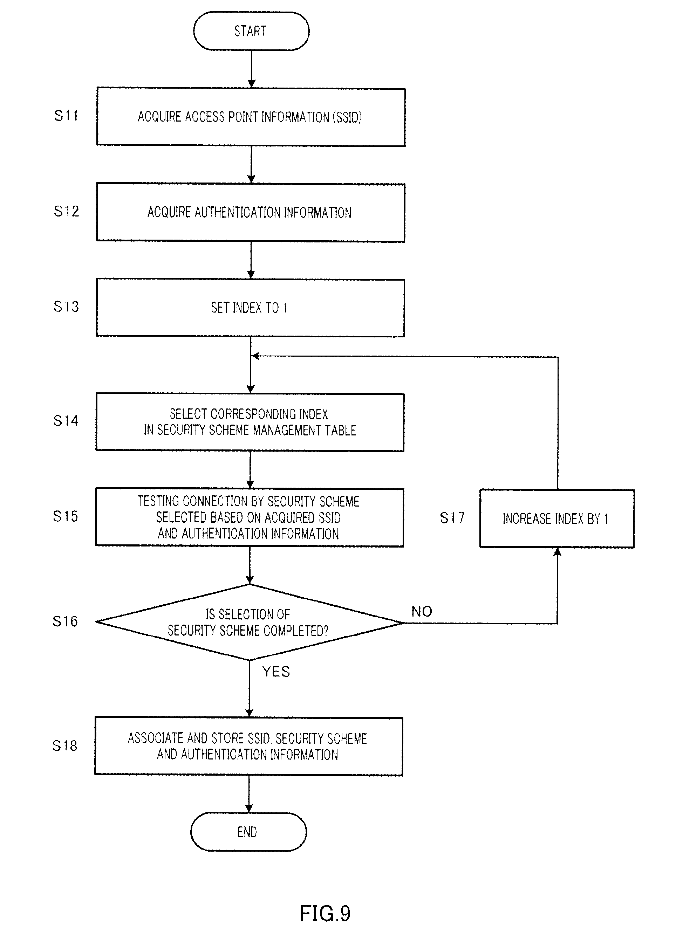

FIG.9 is a flowchart illustrating wireless LAN configuration process in wireless terminal 100 in detail, which illustrates the flow of FIG.8 in detail.

In step S11, access point information acquiring section 111 in security information acquiring section 110 acquires security information (e.g. SSID). For example, access point information acquiring section 111 acquires security information from network configuration screen 310 of FIG.7A, by the SSID configuration.

In step S12, authentication information acquiring section 112 in security information acquiring section 110 acquires authentication information (e.g. WEP key). For example, authentication information acquiring section 112 acquires authentication information from encryption key configuration screen 320 of FIG.7B, by the encryption key configuration.

In step S13, authentication information acquiring section 112 sets up index 1 as an index to refer to security scheme management table 122.

In step S14, security scheme selection control section 121 in security scheme selecting section 120 selects that index in security scheme management table 122. As shown in FIG.3, in security scheme management table 122, security schemes are set up per index (1, 2, 3, ...). For example, the security scheme of scheme A is selected upon index 1, the security scheme of scheme B is selected upon index 2, and the security scheme of scheme C is selected upon scheme C. When the security level configuration is prioritized, security scheme management table 122A of FIG.4 is used, in which security scheme WPA2 (AES) for index 1 is selected and security scheme WPA2 (TKIP) for index 2 is selected. Similarly, when setting speed configuration is prioritized, security scheme management table 122B of FIG.5 is used, in which security scheme WEP for index 1 is selected and security scheme WPA (TKIP) for index 2 is selected. Here, although an example of the table structure of security scheme management table 122 has been described above, the table can adopt a different structure.

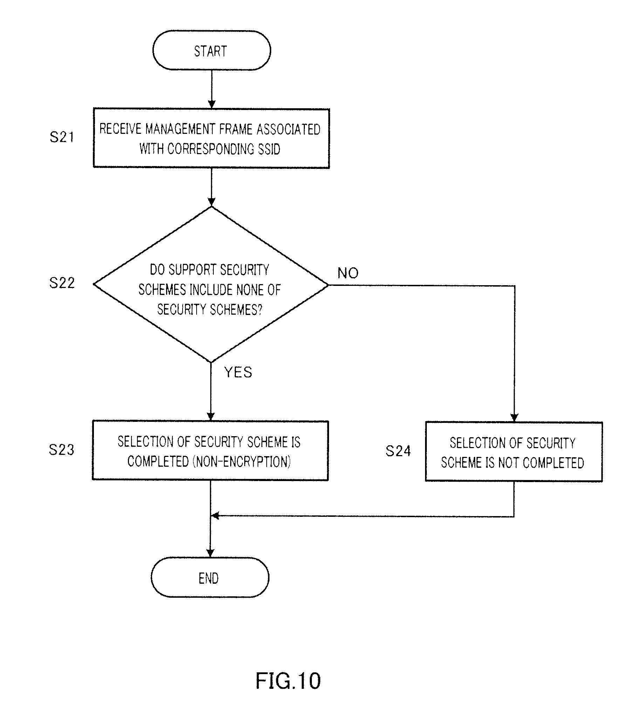

In step S 15, testing connection with access point 200 is tried by security schemes selected in order of index in security scheme management stable 122, based on the acquired SSID and authentication information (e.g. encryption key). Here, **by** testing connection, scheme judging sections 123 to 127 perform communication with access point 200 in processing sequences that conforms to the security schemes. Testing connections in scheme judging sections 123 to 127 will be described later in detail using FIG.10 to FIG.13.

In step S16, security scheme selection control section 121 decides whether or not security scheme selection is completed. Here, when a testing connection succeeds by a selected security scheme or when testing connections fail by the security schemes for all indices in security scheme management table 122, security scheme selection control section 121 determines that security scheme selection is completed. Also, by a completion or stop command of security scheme selection by the user, it is determined that security scheme selection is completed.

If the security scheme selection is not completed in above step S16, security scheme selection control section 121 increases an index to refer to security scheme management table 122 by 1 (i.e. one increment) in step S17, the step returns to above step S14, and the next index is selected to try a testing connection by the security scheme indicated by that index.

When the security scheme selection is completed in above step S16, configuration information management section 130 associates and stores the SSID, the security scheme and the authentication information in step S 18, and the flow ends.

FIG.10 to FIG.12 are flowcharts illustrating testing connection process in scheme judging sections 123 to 127 in detail, which illustrate the flow in step S15 of FIG.9 in detail.

FIG.10 is a flowchart illustrating non-encryption judging process in non-encryption judging section 123 in detail.

In step S21, a management frame associated with that SSID is received. Here, assume that the management frame is a beacon, probe response frame, and so on. Wireless terminal 100, having the wireless LAN functions of wireless communication section 140, receives a beacon from a nearby access point and acquires the network name of the access point, the communication speed of the communication device, the security level, a communication channel and the radio wave level. Also, by providing a probe response frame, it is possible to receive a response similar to a beacon.

In step S22, whether or not the support security schemes include none of the security schemes is decided. Here, the support security schemes presume the capability information field in a management frame.

If the support security schemes include none of the security schemes in above step S22, a security scheme (non-encryption) is selected in step S23 before the flow ends, and the step returns to step S16 in FIG.9.

If the support security schemes include a security scheme in above step S22, it is decided that the security scheme selection is not completed in step S24 before the flow ends, and the step returns to step S16 in FIG.9.

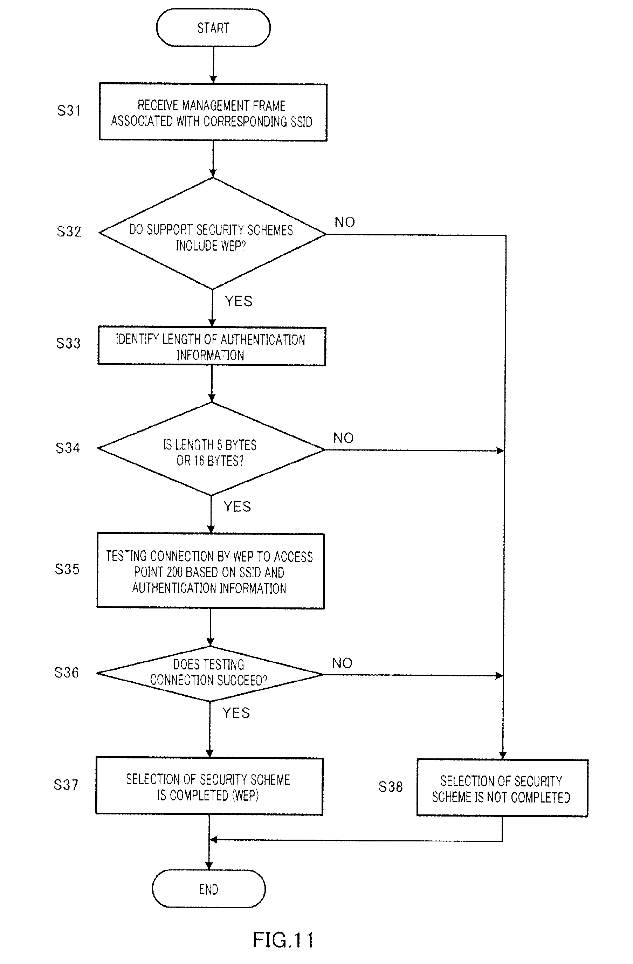

FIG.11 is a flowchart illustrating WEP judging process in WEP judging section 124 in detail.

In step S31, a management frame associated with that SSID is received. Here, the management frame presumes a beacon, probe response frame, and so on.

In step S32, whether or not the support security schemes include WEP is decided. Here, the support security schemes presume the capability information field in the management frame.

If the support security schemes include WEP in above step S32, the length of authentication information is identified in step S33. In this case, how many bytes is the length of a key of WEP (e.g. 16 bytes) is identified. In WEP, the length of the key is defined, and, by deciding whether or not the length of authentication information is 5 bytes or 16 bytes, it is possible to judge whether or not the security scheme is WEP.

In step S34, whether or not the identified length of authentication information is 5 bytes or 16 bytes is decided.

If the length of authentication information is 5 bytes or 16 bytes in above step S34, WEP is judged to be the security scheme, and, based on the SSID and the authentication information, testing connection with access point 200 is tried by WEP.

In step S36, whether or not the testing connection with access point 200 by WEP succeeded is decided.

If the testing connection by WEP succeeded in above step S36, the security scheme (WEP) is selected in step S37 before the flow ends, and the step returns to step S16 in FIG.9.

By contrast, if the support security schemes do not include WEP in above step S32, if the length of authentication information is not 5 bytes or 16 bytes in above step S34, or if the testing connection by WEP failed in above step S36, it is decided in step S38 that the security scheme is not WEP or that WEP connection is not possible. In this case, it is decided that security scheme selection is not completed in step S38 before the flow ends, and the step returns to step S16 in FIG.9.

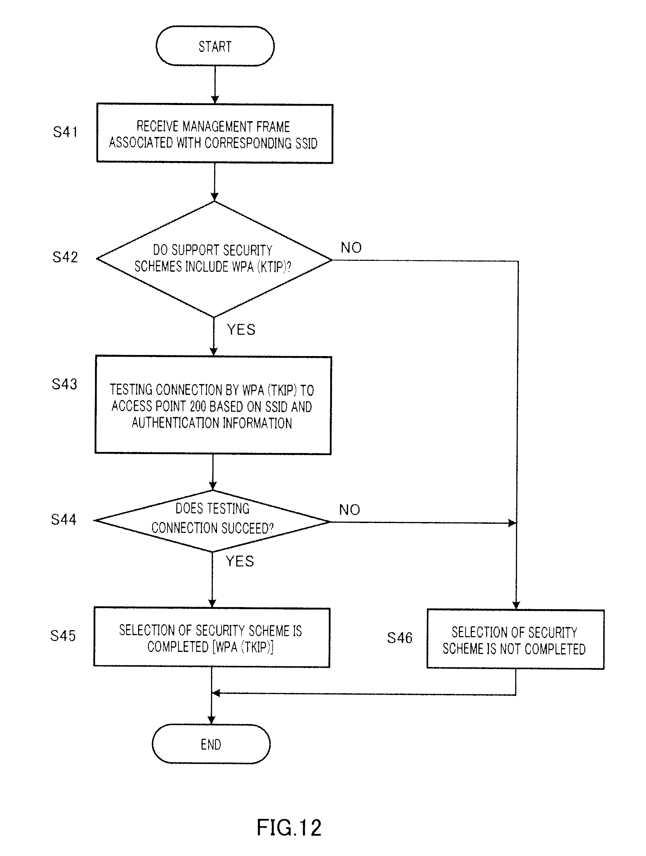

FIG.12 is a flowchart illustrating WPA (TKIP) judging process in WPA (TKIP) judging section 127 in detail.

In step S41, a management frame associated with the SSID is received. Here, the management frame presumes a beacon, probe response frame, and so on.

In step S42, whether or not the support security schemes include WPA (TKIP) is decided. Here, the support security schemes presume the capability information field in the management frame.

If the support security schemes include WPA (TKIP) in above step 42, in step S43, testing connection with access point 200 by WPA (TKIP) is tried based on the SSID and the authentication information.

In step S44, whether or not the testing connection with access point 200 by WPA (TKIP) succeeded is decided.

If the testing connection by WPA (TKIP) succeeded in above step S44, the security scheme (WPA (TKIP)) is selected in step S45 before the flow ends, and the step returns to step S16 in FIG.9.

By contrast, if the support security schemes do not include WPA (TKIP) in above step S42 or if the testing connection by WPA (TKIP) failed in above step S44, it is decided that the WPA (TKIP) testing connection is not possible. In this case, it is decided that security scheme selection is not completed in step S46 before the flow ends, and the step returns to step S16 in FIG.9.

Although WPA (TKIP) judging process in WPA (TKIP) judging section 127 has been described above, it is equally possible to perform judgment for other schemes including WPA2 (TKIP) and WPA2 (AES) in the same way.

As described above in detail, according to the present embodiment, when information to identify an access point (e.g. SSID) and authentication information to connect with the access point (e.g. encryption key) are received as input, scheme judging sections 123 to 127 sequentially try testing connections with the connection target access point according to security schemes selected based on the access point information and the authentication information, and determine the security scheme by which the testing connection succeeded, as the security scheme to use in actual communication, so that it is possible to provide an advantage of allowing the user to spare a step of inputting a security scheme. For example, the user only sets up an SSID in step 1 in FIG.7A and inputs an encryption key in step 2 in FIG.7, whereby wireless terminal 100 tries a testing connection with access point 200 in the background, the security scheme is automatically set up, and the network configuration is completed. Although security scheme selection in step 2 in FIG.1B and key configuration in step 3 in FIG.1C are necessary in a conventional example, according to the present embodiment, these steps are eliminated, so that it is possible to complete wireless LAN configuration by the two steps of step 1 in FIG.7A and step 2 in FIG.7B. By this means, it is possible to simplify the configuration. Further, the user needs not take care of difficult security schemes. Further, it is possible to apply the above technique to existing access points as is, so that it is not necessary to replace access points.

Also, in a testing connection, by using an existing communication protocol, the present embodiment provides an advantage that specific functions need not be added to an access point.

Also, upon judging WEP, by identifying the length of authentication information (e.g. encryption key) before a testing connection, and by trying the testing connection only when the length is a prescribed length, it is possible to provide an advantage of not transmitting unnecessary packets to an access point.

By employing a structure in which a testing connection is tried in order from the security scheme of the highest security level, when an access point uses a plurality of security schemes, it is possible to adopt a scheme of a higher security level. Also, by employing a configuration in which a testing connection is tried in order from the most popular security scheme, it is possible to determine a security scheme quickly. Also, upon WEP judgment, by identifying the length of authentication information (e.g. encryption key) before a testing connection and trying a testing connection only when the length is a prescribed length, it is possible to provide an advantage of not transmitting unnecessary packets to an access point.

In addition to the above advantage, the configuration of an existing access point needs not be changed, so that it is not necessary to provide a new access point and it is possible to provide an excellent advantage of implementing the present invention in an easy manner without extra cost.

The above explanation is an example of a preferred embodiment of the present invention, and the scope of the present invention is not limited to this. For example, either IEEE 802.1x authentication information or WEB authentication information is possible as authentication information. Also, although an SSID has been described above as an example of access point identification information, an essential requirement is to adopt a wireless LAN network identifier such as an SSID, which is an access point identifier, and a BSSID (Basic Service Set IDentifier) of 48 bits. Here, a BSSID is equivalent to a MAC address. Generally, it is possible to set up ESSID's to access points and terminals in a wireless LAN, and allows an access point to communicate only with terminals having matching ESSID's. According to the present embodiment, the configuration of an existing access point is not changed, so that it is possible to apply the present invention to access points of any profile settings.

Also, wireless communication is not limited to a wireless LAN, and WiMAX and UWB are equally possible. Also, the security scheme is not particularly limited to WEP and WPA. Also, access point information is not limited to an SSID. Further, authentication information is not limited to an encryption key, and it is equally possible to adopt an electronic certificate and a combination of ID and password.

Also, although the present embodiment uses the titles of "wireless terminal" and "wireless access method," this is only for ease of explanation, and it is naturally possible to adopt other titles of "wireless LAN terminal," "wireless communication system," "wireless LAN access method," "network configuration method," and so on.

Further, the wireless terminals, the sections forming a wireless communication system such as the types of security scheme management tables, the number of the types, and the access method, are not limited to the above.

The wireless access method described above can be implemented in the form of a program to operate this wireless access method. This program is stored in a computer-readable storage medium.

### Industrial Applicability

The wireless terminal and wireless access method according to the present invention are effective for a mobile communication terminal that performs wireless communication to try network connection via an access point. Also, the present invention is widely applicable to portable electronic devices such as laptop PC's and PDA's having wireless LAN functions.

## Claims

1. A wireless terminal comprising:
a security scheme storage section that stores a plurality of security schemes to use in wireless communication;
an access point information acquiring section that acquires access point information for identifying an access point;
an authentication information acquiring section that acquires authentication information for connecting with an access point;
a security scheme selecting section that selects one security scheme from the plurality of security schemes stored in the security scheme storage section, based on the access point information and the authentication information acquired;
a testing connection trying section that tries a testing connection with an access point of a connection target sequentially, according to a security scheme selected based on the access point information and the authentication information; and
a security scheme determining section that determines a security scheme by which the testing connection succeeds, as a security scheme to use in actual communication.

2. The wireless terminal according to claim 1, wherein the testing connection trying section tries the testing connection in order from a security scheme of a highest security level.

3. The wireless terminal according to claim 1, wherein the testing connection trying section tries the testing connection in order from a most popular security scheme.

4. The wireless terminal according to claim 1, wherein the testing connection trying section tries the testing connection by background processing.

5. The wireless terminal according to claim 1, further comprising a judging section that judges whether a length of the authentication information is equal to a predetermined length,
wherein the testing connection trying section tries the testing connection only when the length of the authentication information is equal to the predetermined length.

6. A wireless access method comprising the steps of:
storing a plurality of security schemes to use in wireless communication;
acquiring access point information for identifying an access point;
acquiring authentication information for connecting with an access point;
selecting one security scheme from the plurality of security schemes stored, based on the access point information and the authentication information acquired;
trying a testing connection with an access point of an connection target sequentially, according to a security scheme selected based on the access point information and the authentication information acquired; and
determining a security scheme by which the testing connection succeeds, as a security scheme to use in actual communication.

7. A program that causes a computer to execute the steps in a wireless access method of:
storing a plurality of security schemes to use in wireless communication;
acquiring access point information for identifying an access point;
acquiring authentication information for connecting with an access point;
selecting one security scheme from the plurality of security schemes stored, based on the access point information and the authentication information acquired;
trying a testing connection with an access point of an connection target sequentially, according to a security scheme selected based on the access point information and the authentication information acquired; and
determining a security scheme by which the testing connection succeeds, as a security scheme to use in actual communication.
